# EUROPEAN PATENT SPECIFICATION

(11) **EP 0 932 968 B1**
(45) Date of publication and mention of the grant of the patent: **15.06.2005**
(21) Application number: 97910471.8
(22) Date of filing: 24.10.1997
(51) Int. Cl.: H04M 1/274, H04Q 7/32, H04Q 7/28

(54) **ESTABLISHING A TELECOMMUNICATION CONNECTION**
AUFBAU EINER TELEKOMMUNIKATIONSVERBINDUNG
ETABLISSEMENT D'UNE CONNEXION DE TELECOMMUNICATION

(30) Priority: 01.11.1996 FI 964412
(43) Date of publication of application: 04.08.1999
(73) Proprietor: Nokia Corporation, 02150 Espoo (FI)
(72) Inventor: AHVENAINEN, Jouko, FIN-00320 Helsinki (FI)
(74) Representative: Äkräs, Tapio Juhani
(86) International application number: PCT/FI1997/000647
(87) International publication number: WO 1998/020662

(56) References cited:
- EP-A- 0 530 010
- WO-A-94/22260
- GB-A- 2 278 756
- US-A- 5 305 372

## Description

### SCOPE OF THE INVENTION

The invention relates to a method for establishing a telecommunication connection between subscriber stations of a first and a second telecommunication system, the first one being a mobile communication system and the second telecommunication system being connected to said mobile communication system via a gateway provided with a gateway number, whereby telecommunication connections are established by dialling a number at a subscriber station of the mobile communication system and by sending a call set-up message from the subscriber station of said mobile communication system, said message comprising a Called Party field and an External Subscriber Number field.

The invention relates to mobile communication systems, particularly to mobile communication systems comprising for instance exchanges, base stations and radio phones, i.e. mobile stations, or subscribers and subscriber data bases. The structure of the system can be cellular, each cell having then at least one base station, which communicates with at least one mobile station on one or more radio channels.

A method of the invention is meant to be used in particular in what are known as trunking networks, which are typically company networks or private networks used by authorities, where all channels are used either by one or more companies or public authorities.

### BACKGROUND OF THE INVENTION

The invention is mainly suitable for mobile communication systems of a digital radio path. The invention is particularly meant to be used in Private Mobile Radio (PMR) networks, i.e. in trunking networks, which are typically company networks or private networks used by authorities, where all channels are used either by one or more companies or public authorities.

A digital PMR mobile communication system is described in the standard *ETS 300 392-1. February 1996. Radio Equipment and Systems (RES); Trans- European Trunked Radio (TETRA); Voice plus Data (V*+*D); Part 1: General network design. European Telecommunications Standards Institute, (ETSI). Pages 43 - 62* and particularly in the standard *ETS 300 392-2. March 1996. Radio Equipment and Systems (RES); Trans-European Trunked Radio (TETRA); Voice plus Data (V*+*D); Part* 2: *Air Interface (Al)*. *European Telecommunications Standards Institute, (ETSI). Pages 177 - 179*.

In PMR networks subscribers have varying needs as regards subscriber numbering. It is for instance desired that the radio network allows using a same numbering scheme as a company or an organisation uses in its own telephone exchange (Private Automatic Branch Exchange = PABX).

A solution provided by some systems is to transfer the number dialled by the user as such from a subscriber terminal to a network infrastructure, for instance to an exchange, where the actual analysis of the number is performed using complex inference rules, in which for instance leading digits and the length of a number are taken into account.

When using a TETRA subscriber terminal for calling an external system, the subscriber has to dial a gateway number, which is a normal 24-bit TETRA number and, in addition, a number which is used to perform forward dialling in the external system, for instance in a public switched telecommunication network. From the user's point of view, it is not practical that he has to separately dial a seven-digit gateway number and then the external network number, which can be even longer than said seven digits. Dialling would thus become far too laborious, particularly as regards PMR networks where the speed of call set-up is important because the networks are used by public authorities.

D1: WO 9422260, discloses a telephone suitable for abbreviated dialing in a public telephone networks. For each phone number subject to the abbreviated dialing, the actual phone number and the necessary area and network codes are stored in the phone memory. When the abbreviated dialing is used, at least a part of the actual phone number is entered via the keypad and the corresponding sequence of digits of the actual phone number is fetched from the memory, whereafter the required area and network codes are included in the number to be dialled.

### BRIEF DESCRIPTION OF THE INVENTION

An object of the invention is to make it easier for a user of a subscriber station of a private mobile radio communication system to dial a number when he is contacting, or wishes to establish a connection to, a subscriber station located in another mobile communication system or in a telecommunication system.

A further object of the present invention is to provide a method and equipment enabling a user of a subscriber station to use in his user interface numbers of other subscriber stations when he wishes to establish a connection to another subscriber station located in the mobile communication system or in another telecommunication system connected to it.

This new type of method is achieved with a method of the invention characterized in that the method comprises the steps of
maintaining at the subscriber station of said private mobile radio communication system a memory table, wherein the first digit of said number that can be dialled by the subscriber station is corresponded to by said gateway number;
dialling at the subscriber station the first digit of the number, and a subscriber number of the second telecommunication system, said subscriber number indicating a subscriber station of the second telecommunication system to which a telecommunication connection is to be established;
fetching from the memory table of the subscriber station the gateway number corresponding to the first digit of said dialled number;
entering said fetched gateway number into said Called Party field of said call set-up message and said subscriber number of the second telecommunication system into said External Subscriber Number field;
sending said call set-up message to the mobile communication system;
establishing a telecommunication connection between said subscriber station of the first telecommunication system and the subscriber station of the second telecommunication system.

The invention further relates to a subscriber station of a private mobile radio communication system, said subscriber station comprising
transmission means for sending call set-up messages, which comprise a Called Party field and a subscriber number field, and other messages;
receiver means for receiving messages;
a user interface, for dialling numbers to establish telecommunication connections;
memory means;
control means for controlling the subscriber station.

The inventive subscriber station is characterized in that
said memory means are arranged to maintain a memory table, wherein the first digit of a number that can be dialled by the subscriber station is corresponded to by a gateway number, which corresponds to a gateway through which a call from the private mobile radio communication system to a second telecommunication system can be set up, and that said subscriber station comprises
fetching means, responsive to the first digit of the number dialled at the mobile communication system, for fetching from said memory table the gateway number corresponding to the first digit, and
entering means for entering said fetched gateway number into the Called Party field of said call set-up message sent by the subscriber station.

The invention is based on the idea that in the memory means of the subscriber station, i.e. the subscriber terminal, is maintained a memory table, wherein the first digit of the number dialled in call set-up by the user is corresponded to by a gateway number, by which the private mobile radio communication system establishes a connection to a second telecommunication or mobile communication system.

So when the user of the subscriber station initiating a call dials a number or another address, a part of which is, as mentioned, entered into the memory means, the other part being a subscriber number of the second telecommunication or mobile communication system, then a gateway number corresponding to the part of the dialled number is fetched from the memory.

The gateway number fetched from the memory means is then entered into the call set-up message which the subscriber station sends. The gateway number is entered into the Called Party field of the call set-up message and the subscriber number of the second telecommunication system dialled by the user of the subscriber station is entered into the External Subscriber Number field or, in a second embodiment of the invention, the subscriber number of an external mobile communication system is entered into the subscriber number field of the call set-up message of the mobile communication system. The generated call set-up message is then sent to a network infrastructure of the mobile communication system, for instance via a base station to an exchange, where the telecommunication connection is established.

An initial part of the number dialled by the user of the subscriber station is thus used as an index for the internal memory table of the subscriber station, which fetches from said table the gateway number, which the subscriber station enters into the appropriate field in the call set-up message.

An advantage of this kind of a method and subscriber station is that they determine the common numbering scheme between the mobile communication system that a subscriber station belongs to and external systems, in connection with the TETRA specifications.

Another advantage of the invention is that a method according to it enables an external network to be dialled without using any special characters, such as '*' or '#', although the invention also allows these characters to be used, if desired. A further advantage the invention offers is that it has no impact on an internal number analysis of a mobile communication system, of its exchange for instance, whereby said analysis can be kept simple and uniform in different mobile communication networks. Subscriber terminals are then the only members with internal operation deviating from the operation of solutions according to the prior art. This maintains the possibility to use different subscriber terminals, also those of the prior art, in one and the same mobile communication network, with different equipment suppliers producing different parts of the network and the network still remaining uniform, as regards its operations and features, and in accordance with the standard.

An advantage of the invention is that it hardly complicates the planning of the numbering at all. in previously known solutions the planning of the numbering can be fairly complicated because numbers have to be provided with certain structures and lengths.

An advantage of the invention is that it fully conforms to the TETRA specifications. The TETRA specifications provide fairly liberal possibilities for numbering and this solution does not restrict the numbering possibilities.

A further advantage of the invention is that a number entered by the subscriber is not divided or analysed in the mobile communication system, but the mobile communication system only routes the call through the system to the gateway unit provided with an interface to the external telecommunication or mobile communication system. The application of the method of the invention is thus not restricted to a particular numbering solution of a particular organisation, nor does it impose such additional conditions on a number arriving from a radio path that could cause problems of compatibility between subscriber terminals of different suppliers.

An advantage of the invention is also that in a method according to the invention it is sufficient that the user of a subscriber terminal dials in the TETRA system only one, fairly short subscriber number, irrespective of whether the call is destined for the TETRA system or for another telecommunication or mobile communication system connected to it.

### BRIEF DESCRIPTION OF THE DRAWINGS

In the following the invention is described in greater detail with reference the attached drawings, in which
Figures 1 and 2 show memory tables of the invention located in memory means of a subscriber station.
Figure 2 shows a memory table of the invention located at a subscriber station.
Figure 3 shows a flow diagram of the operation of a method of the invention.
Figure 4 shows a block diagram of a subscriber station, for instance a radio unit, of the invention.

### DETAILED DESCRIPTION OF THE INVENTION

The invention relates to a mobile communication system, i.e. a radio phone system, according to the TETRA specifications and to its subscriber terminals, i.e. subscriber stations, such as mobile stations, line stations or dispatchers. A method of the invention is used when a TETRA radio phone network is connected to a public telecommunication network and/or to exchanges or to another mobile communication network.

The invention is particularly meant for mobile communication systems where a common numbering is used at the exchange and in the TETRA radio phone system. A subscriber terminal can then, according to the invention, address a connection to be established to a correct destination on the basis of a number dialled by the user and fill in signalling fields of a call set-up message according to the TETRA specifications in such a way that the subscriber does not need to indicate the target network separately in the user interface otherwise than with a part of the number he has dialled.

in a solution of the invention a TETRA subscriber terminal includes a table from which the subscriber terminal is able to retrieve, using either an initial, middle or end part of a number as an index, a gateway number and to enter it into a Called Party field of the call set-up message. The subscriber terminal is also able to enter a subscriber number that has been the main part of a number dialled by the user of the terminal into an External Subscriber Number field of a call set-up message or into a Mobile System Subscriber Number field, i.e. a Called Party Short Subscriber Identity (Called Party SSI) field indicating a subscriber number of a subscriber station of another mobile communication system.

The number series keyed in, or dialled, by the user of the subscriber station includes in a way two totally different number series which, according to the TETRA specifications, are entered also into fully separate message fields of the call set-up message. So the call is in principle routed in the TETRA network to a normal TETRA address, i.e. to a gateway. The external number is, in addition, sent as separate data to said gateway unit which is then able to use it to perform dialling in the other telecommunication system. The invention thus relates to a feature of the subscriber terminal which the subscriber terminal is able to use, when the subscriber dials only one number that can be made compatible for instance with the numbering of the automatic branch exchange of a user organisation, to correctly fill in the fields of the call set-up message to be sent from the subscriber station and to hide, in a way, the gateway dialling from the user, whereby the user does not need to enter the gateway number separately.

In this invention, the normal analysis of a number dialled by the user is thus not performed in the mobile communication network, because the subscriber terminal is able to use its internal memory table to divide the number into correct message fields in such a way that the system only routes the call on the basis of the number to the gateway unit and sends the external number to be used as data for dialling in an external telecommunication system.

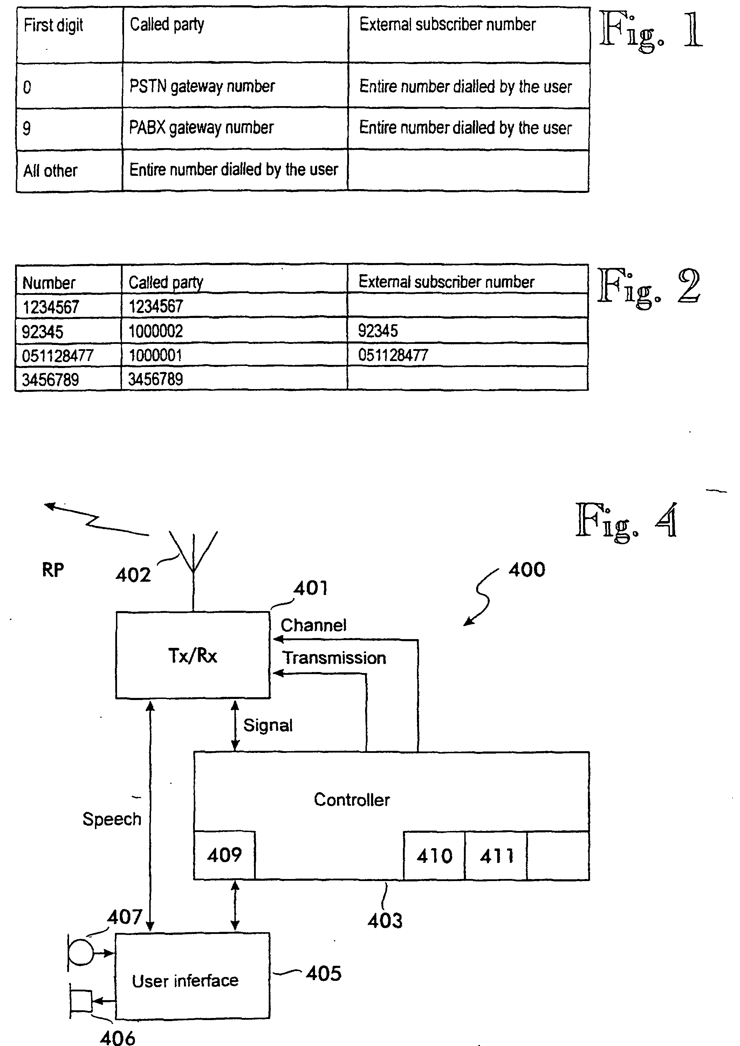

Figure 1 shows a memory table of the invention located in the memory means of the subscriber station. The table illustrates a situation where the part of the number, and here its first character or number (leading digit) in particular, dialled by the user acts as an index to the table.

The first column of the table shows '0' and '9' as alternatives to this character or number. The character could naturally equally well be any other number whatsoever, a letter, a special character, such as '§', '%', '&', '?', or '+' or '-' or some other character. The International Telecommunications Union (ITU) has defined in the recommendation ITU-T E.161 the characters recommended to be used in telecommunication traffic. In the TETRA system the letters A, B, C or D in particular can be used. They are defined in the ETSI recommendation ETR-294 of August 1996, which describes the basic principles of user interfaces (Man Machine Interfaces) in the TETRA mobile communication system. The standard defines two different user interfaces or keypad descriptions - a standard version and an enhanced version, in which the above letters are mentioned. In this example, however, if the first number was any other character, the number series dialled by the user would be entered in full into the Called Party field of the call set-up message.

The second column in the table shows the information to be entered into the Called Party field of the call set-up message to be sent, i.e. in a case according to the invention said information being the gateway number of an external telecommunication system. The external telecommunication system can be a Public Switched Telephone Network (PSTN), or a gateway number of a gateway leading to a PABX exchange of a company or an organisation.

The third column in the table shows a subscriber number of a subscriber located in an external telecommunication system and dialled by the user, to be entered in an External Subscriber Number field of a call set-up message to be sent.

In a second embodiment of the invention, when the external telecommunication system is also a TETRA mobile communication system, the TETRA subscriber number of the second mobile communication system is entered into a Mobile System Subscriber Number field, or a Short Subscriber Identity (SSI) field, of a call set-up message sent by a subscriber station initiating a call.

A call can thus be placed to external networks from a TETRA network by addressing the call in the TETRA network to a gateway number of an external network and by entering the subscriber number of a subscriber of the external network into an External Subscriber Number field.

Figure 2 shows a memory table according to the invention located in the memory means of a subscriber station. The example in the Figure shows an inference table according to the table shown in Figure 1 above. Let us assume that the gateway number leading to a public switched telephone network, i.e. the PSTN gateway number, is 1000001 and the gateway number leading to a private exchange, i.e. the PABX gateway number, is 1000002. Figure 2 shows how the subscriber's TETRA number 1234567 is entered into the Mobile System Subscriber Number field, i.e. the Short Subscriber Identity (SSI) field, of the call set-up message. If, on the other hand, the dialled number is 92345, i.e. with '9' as the first character, then from the memory is fetched a gateway number 1000002 which is entered into the Called Party field, whereby the subscriber number 92345 of an external telecommunication system is entered into the External Subscriber field. It is to be noted that here the first digit '9' is entered into the External Subscriber Number field. It would also be possible not to enter this number at all.

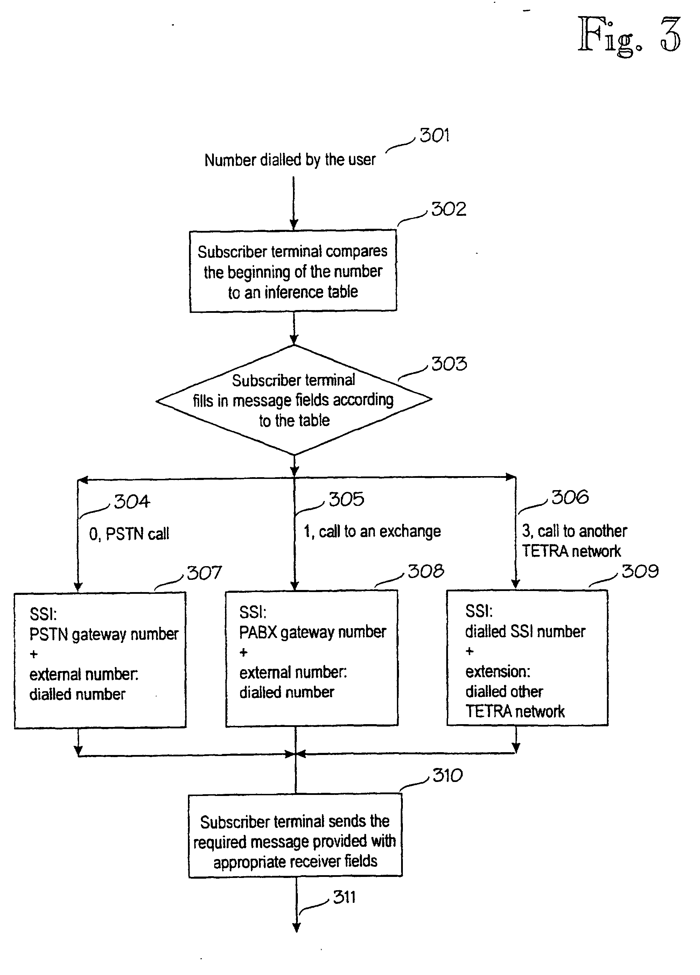

Figure 3 shows a flow diagram of the operation of a method of the invention. In the method of the invention a telecommunication connection is established between subscriber stations of a first and a second telecommunication system, the first one being a mobile communication system and the second telecommunication system being connected to said mobile communication system by a gateway provided with a gateway number. Said mobile communication system is for instance a mobile communication system according to the TETRA specifications and the second telecommunication system is for instance a public switched telephone network, a company exchange or a mobile communication system not conforming to the TETRA specifications. In the method telecommunication connections are established in such a way that a user of a subscriber station of the mobile communication system dials 301 a number, i.e. typically a number series. Connections are usually established by sending a call set-up message from the subscriber station of the mobile communication system, said message comprising a Called Party field and an External Subscriber Number field.

According to the second embodiment of the invention, instead of an External Subscriber Number field, a Mobile System Subscriber Number field is sent in the call set-up message.

In the inventive method, at the subscriber station of the mobile communication system is maintained a memory table (see Figures 1 and 2), wherein a part of a number that has been or can be dialled by the subscriber station is corresponded to by said gateway number.

The method comprises the dialling 301, at the subscriber station, of a number series or a number, which includes a part of a number, and a subscriber number of the second telecommunication system, said subscriber number indicating a subscriber station in the second telecommunication system to which a telecommunication connection is to be established. From the memory table of the subscriber station is then fetched 302 a gateway number corresponding to said part of the dialled number. The fetched gateway number is entered 303 into the Called Party field of the call set-up message and the subscriber number of the dialled other telecommunication system into the External Subscriber Number field of the call set-up message.

This procedure is described in greater detail in steps 304 and 307 in Figure 3. In this example, since the number dialled by the user includes the digit '0', from the memory means is fetched a gateway number PSTN leading to a public switched telephone network, said gateway number being entered into the Called Party field SSI of the call set-up message. The number dialled by the user also includes a subscriber number of the public switched telephone network, which is entered into the External Subscriber Number field of the call set-up message.

As a further alternative, in steps 305 and 308 the number dialled by the user includes the digit '1' (the digit '9' in Figures 1 and 2), whereby from the memory means is fetched a gateway number PABX leading to a private automatic branch exchange, said gateway number being entered into the Called Party field SSI of the call set-up message. The number dialled by the user also includes an extension number of the exchange, which is entered into the External Subscriber Number field of the call set-up message.

An alternative provided by the second embodiment of the invention is to establish a telecommunication connection between a first and a second mobile communication system, which are TETRA mobile communication systems. The mobile communication systems are connected to each other, similarly as in the first embodiment, via a gateway provided with a gateway number. This gateway is typically an Inter System interface (ISI) conforming to the TETRA specifications. In the method telecommunication connections are established by dialling a number at a subscriber station of the first mobile communication system and by sending from the subscriber station of the first mobile communication system a call set-up message comprising a Called Party field and a Mobile System Subscriber Number field.

This procedure is described in greater detail in steps 306 and 309 in Figure 3. The user of the subscriber station dials a number series including a part indicating where the gateway number leading to the second mobile communication system is located at in the memory means of the subscriber station. The gateway number fetched from the memory means is entered, according to the invention, into a Called Party field, i.e. a Called Party Extension field, of the call set-up message. The number dialled by the user also includes a subscriber number of a subscriber (subscriber B) of the second mobile communication system, said subscriber number being entered into the Mobile System Subscriber Number field of the call set-up message.

All the above alternatives involve the sending 310 of a generated call set-up message to the mobile communication system, for instance via a base station to an exchange, or via line connections to an exchange, if the subscriber station is a Line Station.

The mobile communication system then establishes a telecommunication connection between said subscriber station of the first telecommunication system (or the first mobile communication system) and a subscriber station of said second telecommunication system (or second mobile communication system).

It is to be noted that the subscriber station to be used in the invention can be a mobile station or a radio phone. The subscriber station can also be a line station connected to the system by line connections, or a dispatcher.

Figure 4 shows a block diagram of a subscriber station, in this case a radio unit, of the invention. The Figure shows a typical radio unit 400, i.e. a radio phone, a mobile station or for instance a subscriber station, used by the subscriber. The radio unit can also function as a repeater station, if it has two transmitter or transceiver units. The function of a transceiver (TX/RX) 401 is to tune to a radio channel used at a particular time. To the transceiver 401 is connected an antenna 402, which is connected to a radio path RP. Usually, radio frequencies in the range of 60 to 1000 MHz (VHF and UHF ranges) are used, but other frequencies are also possible.

A radio path transmission can also be digital, as for instance in systems according to TETRA specifications.

A user interface 405 comprises electroacoustic transducer means, typically a headphone 406 and a microphone 407, and optionally buttons for initiating and ending a call, and for dialling. Since in a trunking system a call on the radio path RP is advantageously simplex, the subscriber station usually also has a push-to-talk button that must be depressed for the duration of a speech item. The push-to-talk button is not shown in Figure 4.

The function of a controller 403 is to control the operation of the radio unit. The controller 403 is connected to the user interface 405, from which it receives signals e.g. for initiating and ending a call. The controller 403 can also give the user, via the user interface 405, acoustic or visual signals that relate to the operation of the radio phone and/or the radio phone system.

The controller 403 is connected to the transceiver TX/RX 401. The transceiver comprises a transmitter Tx and a receiver Rx. The transceiver uses a channel allocated by the controller 403, i.e. the transceiver 401 tunes to the channel, i.e. to a radio frequency and a suitable time slot, allocated by the controller 403. The radio unit of the invention is able to tune to a direct mode channel. The transceiver 401 is also activated by the controller 403. The controller 403 receives and sends signalling messages through the transceiver 401. The radio unit 400 of the invention can be used for instance in a mobile communication system, i.e. in a radio system, that comprises a radio network with at least one exchange, base station and subscriber stations, and possibly one or more repeater stations, which relay traffic between the at least one base station and the subscriber stations communicating on the direct mode channel. Said radio unit comprises a transceiver 401 for receiving transmissions sent by other radio units and for sending transmissions to said other radio units, a control unit 403 for controlling the operations of the radio unit and a user interface 405. The radio unit also comprises a memory means 409 for storing the data needed in the radio unit.

In the radio unit 400 of the invention the memory means 409 are arranged to maintain the memory table 409 according to the invention (Figures 1 and 2), wherein the part of the number that can be dialled by the subscriber station is corresponded to by a gateway number, which corresponds to a gateway through which a call from the mobile communication system to a second telecommunication system can be set up.

The subscriber station of the invention further comprises fetching means 410, responsive to the part of the number dialled at the mobile communication system, for fetching from the memory table the gateway number corresponding to the part, and entering means 411 for entering the fetched gateway number into the Called Party field of said call set-up message sent by the subscriber station.

The number dialled at the subscriber station of the invention also comprises a subscriber number of the second telecommunication system, said subscriber number indicating a subscriber station, which is located in the second telecommunication system and to which a connection is to be established.

In addition, in a solution according to the invention said entering means 411 are arranged to enter the subscriber number of the subscriber station of the second telecommunication system into the External Subscriber Number field of the call set-up message.

In an alternative solution of the invention said entering means 411 are arranged to also enter said part of the number, in addition to said subscriber number, into the External Subscriber Number field.

In the second embodiment of the invention, the number dialled at the subscriber station also comprises a subscriber number of the second telecommunication system, said subscriber number indicating a subscriber station, which is located in the second mobile communication system and to which a connection is to be established (Figure 3, 309). Said second mobile communication system is typically also a mobile communication system according to the TETRA specifications. In addition, in the second embodiment of the invention, the entering means 411 are arranged to enter the subscriber number of the subscriber station of the second mobile communication system into the Mobile System Subscriber Number field of the call set-up message to be sent.

The drawings and the related description are only meant to illustrate the idea of the invention. The details of a solution according to the invention can vary within the scope of the claims. Although the invention is described above mainly in connection with a TETRA mobile communication system, the invention can be used also in other kinds of mobile communication systems with a similar call set-up message.

A possible alternative is to determine network specifically whether the initial part of a number used for dialling is to be kept within or removed from the number to be entered into the external number field. In the example shown in Figure 1 this means that the first digit 0 or 9 would be removed from the number already before the number is entered into the External Subscriber Number field. Into said field, for instance, would then be entered the numbers 2345 and 51128477, as shown in Figure 2.

## Claims

1. A method for establishing a telecommunication connection between subscriber stations of a first and a second telecommunication system, the first one being a private mobile radio communication system and the second telecommunication system being connected to said private mobile radio communication system via a gateway provided with a gateway number, whereby telecommunication connections are established by dialling (301) a number at a subscriber station (400) of the private mobile radio communication system and by sending a call set-up message from the subscriber station (400) of said private mobile radio communication system, said message comprising a Called Party field and an External Subscriber Number field, **characterized in that** the method comprises the steps of
maintaining at the subscriber station of said private mobile radio communication system a memory table (409), wherein the first digit of said number that can be dialled by the subscriber station (400) is corresponded to by said gateway number;
dialling (301) at the subscriber station (400) the first digit of the number that can dialled, and a subscriber number of the second telecommunication system, said subscriber number indicating a subscriber station of the second telecommunication system to which a telecommunication connection is to be established;
fetching (302) from the memory table (409) of the subscriber station the gateway number corresponding to the first digit of said dialled number;
entering (303) said fetched gateway number into said Called Party field of said call set-up message (311) and said subscriber number of the second telecommunication system into said External Subscriber Number field;
sending (311) said call set-up message to the private mobile radio communication system; and
establishing a telecommunication connection between said subscriber station (400) of the first telecommunication system and the subscriber station of the second telecommunication system.

2. A method according to claim 1, **characterized in that** in said entering step (303), said first digit of the number is also entered into said External Subscriber Number field.

3. A method according to claim 1 , **characterized in that t**he second telecommunication system is also a private mobile radio communication system, whereby the method further comprises
entering (303) said fetched gateway number into said Called Party field of said call set-up message and said subscriber number of the second private mobile radio communication system into a Mobile System Subscriber Number field comprised by said call set-up message.

4. A method according to any one of claims 1 - 3, **characterized in that** said dialled number can also include other characters than numbers.

5. A method according to any one of claims 1 - 4, **characterized in that** said first digit of the dialled number can be at least one of the following characters:
- a number;
- a character '#';
- a character '*';
- a character '+' or '-';
- a letter.

6. A method according to any of preceding claims, **characterized in that** said private mobile radio communication system is a TETRA system.

7. A subscriber station of a private mobile radio communication system comprising
transmission means (401) for sending call set-up messages, which comprise a Called Party field and a Subscriber Number field, and other messages;
receiver means (401) for receiving messages;
a user interface (405) for dialling numbers to establish telecommunication connections;
memory means (409);
control means (403) for controlling the subscriber station, **characterized in that**
said memory means (409) are arranged to maintain a memory table, wherein the first digit of a number that can be dialled is corresponded to by a gateway number, which corresponds to a gateway, through which a call from the private mobile radio communication system to a second telecommunication system can be set up, and that said subscriber station (400) comprises
fetching means (410), responsive to the first digit of the number dialled at the private mobile radio communication system, for fetching from said memory table (409) the gateway number corresponding to the first digit, and
entering means (411) for entering said fetched gateway number into the Called Party field of said call set-up message sent by the subscriber station (400).

8. A subscriber station (400) according to claim 7, **characterized in that**
the number to be dialled also comprises a subscriber number of the second telecommunication system, said subscriber number indicating a subscriber station, which is located in the second telecommunication system and to which a connection is to be established, and that
said entering means (411) are arranged to enter said subscriber number of the subscriber station of the second telecommunication system into an External Subscriber Number field of said call set-up message.

9. A subscriber station according to claim 8, **characterized in that** said entering means (411) are arranged to also enter (303) the first digit of the number, in addition to said subscriber number, into said External Subscriber Number field.

10. A subscriber station according to claim 7, **characterized in that**
the number to be dialled also comprises the subscriber number of the second telecommunication system, said subscriber number indicating the subscriber station, which is located in the second private mobile radio communication system and to which the connection is to be established, and that
said entering means (411) are arranged to enter (303, 309) said subscriber number of the subscriber station of the second private mobile radio communication system into a Mobile System Subscriber Number field of said call set-up message.

11. A subscriber station according to any one of claims 7 - 10, **characterized in that** said subscriber station is a TETRA subscriber station.

## Patentansprüche

1. Verfahren zum Aufbauen einer Telekommunikations-Verbindung zwischen Teilnehmerstationen eines ersten und eines zweiten Telekommunikationssystems, wobei das erste ein privates Mobilfunk-Kommunikationssystem ist, und das zweite Telekommunikationssystem mit dem privaten Mobilfunk-Kommunikationssystem über einen Netzübergang verbunden ist, der mit einer Netzübergangs-Nummer versehen ist, wobei Telekommunikations-Verbindungen durch Wählen (301) einer Nummer an einer Teilnehmerstation (400) des privaten Mobilfunk-Kommunikationssystems, und durch Senden einer Anruf-Aufbaunachricht von der Teilnehmerstation (400) des privaten Mobilfunk-Kommunikationssystems aufgebaut werden, wobei die Nachricht ein Feld Angerufene Partei und ein Feld Externe Teilnehmemummer umfasst, **dadurch gekennzeichnet, dass** das Verfahren die Schritte umfasst
- Aufrechterhalten einer Speichertabelle (409) an der Teilnehmerstation des privaten Mobilfunk-Kommunikationssystems, wobei die erste Stelle der Nummer, die von der Teilnehmerstation (400) gewählt werden kann, der Netzübergangs-Nummer entspricht;
- Wählen (301) der ersten Stelle der Nummer, die gewählt werden kann, und einer Teilnehmernummer des zweiten Telekommunikationssystems, welche eine Teilnehmerstation des zweiten Telekommunikationssystems angibt, mit der eine Telekommunikationsverbindung aufgebaut werden soll, an der Teilnehmerstation (400);
- Abrufen (302) der Netzübergangs-Nummer, die der ersten Stelle der gewählten Nummer entspricht, aus der Speichertabelle (409) der Teilnehmerstation;
- Eingeben (303) der abgerufenen Netzübergangs-Nummer in das Feld Angerufene Partei der Anruf-Aufbaunachricht (311) und der Teilnehmernummer des zweiten Telekommunikationssystems in das Feld Externe Teilnehmemummer;
- Senden (311) Anruf-Aufbaunachricht an das private Mobilfunk-Kommunikationssystem; und
- Aufbauen einer Telekommunikationsverbindung zwischen der Teilnehmerstation (400) des ersten Telekommunikationssystems und der Teilnehmerstation des zweiten Telekommunikationssystems

2. Verfahren nach Anspruch 1, **dadurch gekennzeichnet, dass** in dem Eingabeschritt (303) die erste Stelle der Nummer ebenfalls in das Feld Externe Teilnehmernummer eingegeben wird.

3. Verfahren nach Anspruch 1, **dadurch gekennzeichnet, dass** das zweite Telekommunikationssystem auch ein privates Mobilfunk-Kommunikationssystem ist, wobei das Verfahren weiter umfasst
- Eingeben (303) der abgerufenen Netzübergangs-Nummer in das Feld Angerufene Partei der Anruf-Aufbaunachricht, und der Teilnehmernummer des zweiten privaten Mobilfunk-Kommunikationssystems in ein Feld Mobilsystem-Teilnehmernummer, das die Anruf-Aufbaunachricht umfasst.

4. Verfahren nach irgendeinem der Ansprüche 1 - 3, **dadurch gekennzeichnet, dass** die gewählte Nummer auch andere Zeichen als Nummern enthalten kann.

5. Verfahren nach irgendeinem der Ansprüche 1 - 4, **dadurch gekennzeichnet, dass** die erste Stelle der gewählten Nummer mindestens eines der folgenden Zeichen sein kann:
- eine Nummer;
- ein Zeichen "#";
- ein Zeichen "*";
- ein Zeichen "+" oder "-";
- ein Buchstabe.

6. Verfahren nach irgendeinem der vorhergehenden Ansprüche, **dadurch gekennzeichnet, dass** das private Mobilfunk-Kommunikationssystems ein TETRA-System ist.

7. Teilnehmerstation eines privaten Mobilfunk-Kommunikationssystems, umfassend
- Sendemittel (401) zum Senden von Anruf-Aufbaunachrichten, die ein Feld Angerufene Partei und ein Feld Teilnehmernummer umfassen, und anderen Nachrichten;
- Empfängermittel (401) zum Empfangen von Nachrichten;
- eine Benutzerschnittstelle (405) zum Wählen von Nummern, um Telekommunikationsverbindungen aufzubauen;
- Speichermittel (409);
- Steuermittel (403) zum Steuern der Teilnehmerstation;
**dadurch gekennzeichnet, dass**
- die Speichermittel (409) eingerichtet sind, um eine Speichertabelle aufrechtzuerhalten, wobei die erste Stelle einer Nummer, die gewählt werden kann, einer Netzübergangs-Nummer entspricht, die einem Netzübergang entspricht, durch den ein Anruf von dem privaten Mobilfunk-Kommunikationssystem zu einem zweiten Telekommunikationssystem aufgebaut werden kann, und dass die Teilnehmerstation (400) umfasst;
- Abrufmittel (410), ansprechend auf die erste Stelle der Nummer, die bei dem privaten Mobilfunk-Kommunikationssystem gewählt wird, um aus der Speichertabelle (409) die Netzübergangs-Nummer abzurufen, die der ersten Stelle entspricht; und
- Eingabemittel (411) zum Eingeben der abgerufenen Netzübergangs-Nummer in das Feld Angerufene Partei der Anruf-Aufbaunachricht, die von der Teilnehmerstation (400) gesendet wird.

8. Teilnehmerstation (400) nach Anspruch 7, **dadurch gekennzeichnet, dass**
- die zu wählende Nummer auch eine Teilnehmemummer des zweiten Telekommunikationssystems umfasst, wobei die Teilnehmernummer eine Teilnehmerstation angibt, die sich in dem zweiten Telekommunikationssystem befindet, und zu der eine Verbindung aufgebaut werden soll; und dass
- die Eingabemittel (411) eingerichtet sind, um die Teilnehmernummer der Teilnehmerstation des zweiten Telekommunikationssystems in ein Feld Externe Teilnehmernummer der Anruf-Aufbaunachricht einzugeben.

9. Teilnehmerstation nach Anspruch 8, **dadurch gekennzeichnet, dass** die Eingabemittel (411) eingerichtet sind, um die erste Stelle der Nummer zusätzlich zu der Teilnehmernummer ebenfalls in das Feld Externe Teilnehmernummer einzugeben (303).

10. Teilnehmerstation nach Anspruch 7, **dadurch gekennzeichnet, dass**
- die zu wählende Nummer auch die Teilnehmernummer des zweiten Telekommunikationssystems umfasst, wobei die Teilnehmernummer die Teilnehmerstation angibt, die sich in dem zweiten privaten Mobilfunk-Kommunikationssystem befindet, und zu der eine Verbindung aufgebaut werden soll; und dass
- die Eingabemittel (411) eingerichtet sind, um die Teilnehmernummer der Teilnehmerstation des zweiten privaten Mobilfunk-Kommunikationssystems in ein Feld Mobilsystem-Teilnehmernummer der Anruf-Aufbaunachricht einzugeben (303, 309).

11. Teilnehmerstation nach irgendeinem der Ansprüche 7 - 10, **dadurch gekennzeichnet, dass** die Teilnehmerstation eine TETRA-Teilnehmerstation ist.

## Revendications

1. Procédé d'établissement d'une connexion de télécommunication entre des stations d'abonné d'un premier et d'un deuxième système de télécommunication, le premier étant un système de radiocommunication mobile privé et le deuxième système de télécommunication étant connecté audit système de radiocommunication mobile privé par l'intermédiaire d'une passerelle munie d'un numéro de passerelle, de manière à ce que des connexions de télécommunication soient établies en composant (301) un numéro au niveau d'une station d'abonné (400) du système de radiocommunication mobile privé et en envoyant un message de mise en place d'appel à partir de la station d'abonné (400) dudit système de radiocommunication mobile privé, ledit message comprenant un champ Correspondant Appelé et un champ Numéro d'Abonné Externe, **caractérisé en ce que** le procédé comprend les étapes consistant à
entretenir au niveau de la station d'abonné dudit système de radiocommunication mobile privé une table de mémoire (409), dans laquelle le premier chiffre dudit numéro qui peut être composé par la station d'abonné (400) est mis en correspondance avec ledit numéro de passerelle ;
composer (301) au niveau de la station d'abonné (400) le premier chiffre du numéro qui peut être composé et un numéro d'abonné du deuxième système de télécommunication, ledit numéro d'abonné indiquant une station d'abonné du deuxième système de télécommunication avec laquelle une connexion de télécommunication doit être établie ;
extraire (302) de la table de mémoire (409) de la station d'abonné le numéro de passerelle correspondant au premier chiffre dudit numéro composé ;
entrer (303) ledit numéro de passerelle extrait dans ledit champ Correspondant Appelé dudit message de mise en place d'appel (311) et ledit numéro d'abonné du deuxième système de télécommunication dans ledit champ Numéro d'Abonné Externe ;
envoyer (311) ledit message de mise en place d'appel au système de radiocommunication mobile privé ; et
établir une connexion de télécommunication entre ladite station d'abonné (400) du premier système de télécommunication et la station d'abonné du deuxième système de télécommunication.

2. Procédé selon la revendication 1, **caractérisé en ce que** dans ladite étape d'entrée (303), ledit premier chiffre du numéro est également entré dans ledit champ Numéro d'Abonné Externe.

3. Procédé selon la revendication 1, **caractérisé en ce que** le deuxième système de télécommunication est également un système de radiocommunication mobile privé, de manière à ce que le procédé comprenne en outre les étapes consistant à
entrer (303) ledit numéro de passerelle extrait dans ledit champ Correspondant Appelé dudit message de mise en place d'appel et ledit numéro d'abonné du deuxième système de radiocommunication mobile privé dans un champ Numéro d'abonné du Système Mobile compris dans ledit message de mise en place d'appel.

4. Procédé selon l'une quelconque des revendications 1 à 3, **caractérisé en ce que** ledit numéro composé peut également comprendre des caractères autres que des nombres.

5. Procédé selon l'une quelconque des revendications 1 à 4, **caractérisé en ce que** ledit premier chiffre du numéro composé peut être au moins l'un des caractères suivants :
- un nombre ;
- un caractère "#" ;
- un caractère "*" ;
- un caractère "+" ou "-" ;
- une lettre.

6. Procédé selon l'une quelconque des revendications précédentes, **caractérisé en ce que** ledit système de radiocommunication mobile privé est un système TETRA.

7. Station d'abonné d'un système de radiocommunication mobile privé, comprenant
des moyens de transmission (401) pour envoyer des messages de mise en place d'appel qui comprennent un champ Correspondant Appelé et un champ Numéro d'Abonné, et d'autres messages ;
des moyens de réception (401) pour recevoir des messages ;
une interface utilisateur (405) pour composer des numéros afin d'établir des connexions de télécommunication ;
des moyens de mémoire (409) ;
des moyens de commande (403) pour commander la station d'abonné,
**caractérisée en ce que**
lesdits moyens de mémoire (409) sont agencés pour entretenir une table de mémoire, dans laquelle le premier chiffre d'un numéro qui peut être composé est mis en correspondance avec un numéro de passerelle, qui correspond à une passerelle à travers laquelle un appel du système de radiocommunication mobile privé à un deuxième système de télécommunication peut être mis en place, et **en ce que** ladite station d'abonné (400) comprend
des moyens d'extraction (410), répondant au premier chiffre du numéro composé au niveau du système de radiocommunication mobile privé, pour extraire de ladite table de mémoire (409) le numéro de passerelle correspondant au premier chiffre ; et
des moyens d'entrée (411) pour entrer ledit numéro de passerelle extrait dans le champ Correspondant Appelé dudit message de mise en place d'appel envoyé par la station d'abonné (400).

8. Station d'abonné (400) selon la revendication 7, **caractérisée en ce que**
le numéro à composer comprend également un numéro d'abonné du deuxième système de télécommunication, ledit numéro d'abonné indiquant une station d'abonné, qui est située dans le deuxième système de télécommunication et avec laquelle une connexion doit être établie, et **en ce que**
lesdits moyens d'entrée (411) sont agencés pour entrer ledit numéro d'abonné de la station d'abonné du deuxième système de télécommunication dans un champ Numéro d'Abonné Externe dudit message de mise en place d'appel.

9. Station d'abonné selon la revendication 8, **caractérisée en ce que** lesdits moyens d'entrée (411) sont agencés pour entrer (303) également le premier chiffre du numéro, en plus dudit numéro d'abonné, dans ledit champ Numéro d'Abonné Externe.

10. Station d'abonné selon la revendication 7, **caractérisée en ce que**
le numéro à composer comprend également le numéro d'abonné du deuxième système de télécommunication, ledit numéro d'abonné indiquant la station d'abonné qui est située dans le deuxième système de radiocommunication mobile privé et avec laquelle la connexion doit être établie, et **en ce que**
lesdits moyens d'entrée (411) sont agencés pour entrer (303, 309) ledit numéro d'abonné de la station d'abonné du deuxième système de radiocommunication mobile privé dans un champ Numéro d'Abonné du Système Mobile dudit message de mise en place d'appel.

11. Station d'abonné selon l'une quelconque des revendications 7 à 10, **caractérisée en ce que** ladite station d'abonné est une station d'abonné TETRA.
